# EUROPEAN PATENT SPECIFICATION

(11) **EP 4 179 031 B1**
(45) Date of publication and mention of the grant of the patent: **11.11.2026**
(21) Application number: 21842786.2
(22) Date of filing: 12.07.2021
(51) Int. Cl.: C09D 7/61, B82Y 30/00, C09D 5/00, H01B 3/02

(54) **HYBRID INSULATING COMPOUND FOR USE IN SYSTEMS REQUIRING HIGH POWER OF THERMAL INSULATION**
HYBRIDE ISOLATIONSMASSE ZUR VERWENDUNG IN SYSTEMEN MIT HOHER WÄRMEDÄMMUNGSLEISTUNG
COMPOSÉ ISOLANT HYBRIDE DESTINÉ À ÊTRE UTILISÉ DANS DES SYSTÈMES NÉCESSITANT UNE PUISSANCE ÉLEVÉE D'ISOLATION THERMIQUE

(30) Priority: 13.07.2020 US 202063050969 P; 25.01.2021 US 202117156791
(43) Date of publication of application: 17.05.2023
(60) Divisional application: 25177716.5 / 4 600 974
(73) Proprietor: Nanotech, Inc., Katy, TX 77449 (US)
(72) Inventor: REZENDE, Claudinei Calado, Katy, TX 77449 (US)
(74) Representative: J A Kemp LLP
(86) International application number: PCT/US2021/041274
(87) International publication number: WO 2022/015645

(56) References cited:
- EP-A1- 3 275 307
- EP-A1- 3 575 374
- WO-A1-2018/181802
- WO-A1-2018/181803
- CN-A- 108 358 588
- US-A1- 2004 101 699
- US-A1- 2005 159 523
- US-A1- 2010 064 614
- US-A1- 2019 256 418
- US-B1- 6 533 855

## Description

### BACKGROUND OF THE INVENTION

The present invention is directed to a hybrid insulating compound, and more particularly, a hybrid insulation compound for use in a system requiring highly effective insulation in extreme temperature conditions.

Thermal insulation material is known in the art and typically is considered to be material that has the ability to delay and/or hinder the propagation of thermal energy between two or more bodies, considering that according to the physical laws of heat propagation, the sum of the amounts of heat exchanged must be null based on the zero principle of thermodynamics. Heat exchange occurs spontaneously until the bodies involved in an "isolated system" reach thermal equilibrium and, consequently, are at the same temperature.

The most common and low-cost insulators are rock wool, and glass wool, both having a mineral origin. Rock wool is a thermal insulator of mineral origin produced from a volcanic rock, the diabase, by fusion, and is an incombustible material that is completely permeable to air and water vapor, however, it does not absorb water. In addition, rock wool is characterized by high compressibility, but, nevertheless, it has a low resistance to cutting. Due to these factors, rock wool is usually ordered prefabricated by industries and companies that use the product, and is packaged in the form of rolls and panels.

To use rock wool it is recommended that one avoids direct contact with the material, as well as avoid contact with air in closed housing environments, creating the need for appropriate personal protective equipment. The technical parameters of rock wool include a density 20 to 150kg/m³, thermal conductivity of 0.037W/m. °C, insulation performance at maximum operating temperatures between 150 and 250°C, non-combustible, according to the ISO 1182 method, where the blankets withstand temperatures up to 750°C in continuous use and temperature peaks of maximum 1,000°C.

Glass wool is a material composed essentially of sand and pieces of recycled glass, obtained by extruding these molten minerals. Glass wool provides a passive reaction to fire, has good water resistance for a short period, however, when subjected to high humidity, glass wool's performance is below expectations. The durability of glass wool for optimal performance is ten years and can be stored in different ways, from panels to rolls. The material's main thermal characteristics are: density 13 to 100 kg / m³, thermal conductivity of 0.034-0.045 W / m. ° C and withstands temperatures up to 450°C (resin products) and 550 °C (resin-free products).

Synthetic thermal insulators, with special emphasis on materials based on silica aerogels, are still little used in place of mineral wools. Silica aerogels are highly porous materials prepared by a sol-gel process and dried under supercritical conditions. In aerogels ninety-nine percent (99%) of the volume is formed by empty spaces with an average density of up to 0.01 g/cc, much lower than conventional silica glasses (2.2 g / cc).

Due to the composition being formed by silica nanoparticles, silicon oxide, the material forms a solid structure of extremely low density but possesses strong insulation properties. The flexible blanket made of aerogel has high thermal performance, in addition to having a low thickness required for application and has high flexibility for installation; which usually presents characteristics favorable to environments subject to high humidity.

The primary interest regarding the use of aerogel, especially silica aerogel, are its unusual properties when compared to the thermal insulators. Aerogel properties include micro porosity and thermal conductivity. Although these are different properties, they are directly related. The micro porosity, that is, the small diameters of the cavities vary from micro pores (2 mm in diameter) to macropores (greater than 50 mm in diameter). However, the material is composed mostly of mesopores (2mm up to 50mm in diameter). Thus, an aspect developed by aerogel is its open nature of interconnectivity, which allows gas to pass through the material. Due to this same porosity and pore size, the silica aerogel is a material that has a very low thermal conductivity. This conductivity value is of the order of 0.02W / m.K at room temperature and constant air pressure.

For commercial applications, the most popular silica aerogel technology is the flexible blanket. From the development of the silica aerogel, a North American company in partnership with a Scotswoman developed a flexible aerogel blanket, which in addition to incorporating the original aerogel, has flexible fibers added to its constitution, allowing the blanket to obtain thermal insulation with high performance and easy installation. The technical specifications for more specific evaluation of the flexible aerogel blanket include thicknesses from 0.20 in (5 mm) to 0.40 in (10 mm), shape of the material in 140 m² rolls and rolls 80 m², maximum usage temperature of 1200°F (650°C), Density12.5 lb / ft³ (0.20 g / cc), hydrophobic, compression resistance> 40.7 kPa at 10% deformation, water vapor absorption <5 % (according to weight), fungal resistance of non-growing insulation materials, surface burning (ASTM E84) and spreading index: <5 (fireproofing). In addition, the material has high resistance to extreme temperature variations, up to 200°C and up to 650°C for fire protection applications.

The thermal conductivity of the aerogel blanket increases approximately exponentially with the increase in the temperature of the surface in contact. Observed is that thermal conductivity is present in the order of 0.013 W / m.K at a temperature of 0°C, however there is a thermal conductivity that reaches 0.023 W / m.K at a temperature of 260°C.

Thermal inks/paints are the latest commercially available materials. Thermal paints are a ceramic and silica composite that provides thermal insulation to the surfaces on which they are applied. Due to being a water-based acrylic paint, they have excellent adhesion to the surfaces where applied, offering protection against corrosion under insulation, as the material does not allow the creation of an environment with humidity and oxygen in contact with the surface in question.

Thermal paints can be applied to the most varied equipment such as pipes, valves, tanks, filters, heat exchangers, processors and boilers during the operation, since their application occurs through blasting, a process in which a gun of paint sprays, at high pressure, the thermal paint on the surface to be insulated.

Intumescent materials are, in general, used to protect metal and wood structures, in addition to plastic and fabric substrates. Intumescent paints are chemical compounds that, when subjected to high temperatures, undergo various reactions that originate a carbonized foam with strong insulation performance, this material being consumed by fire and may be called sacrificial material.

Intumescent paints are heat-reactive products, which, at approximately 200° C, begin a process of volumetric expansion, often reaching their initial volume, depending on the applied thickness and temperature to which they are exposed. In this process, non-toxic gases are released that act together with special resins forming a rigid "foam" on the surface of the structure, causing the delay in the rise of temperatures in the metal elements, preventing the profile from collapsing.

This type of material requires that the correct surface preparation has been made according to the use or location of the building, the application of primers or funds compatible with this use (and according to the manufacturers' information), application of the correct thickness defined both for the protection time and for the type of profile and finally, and after the drying of the intumescent paint, finishing paints are applied that allow the desired aesthetic aspect (color and brightness pattern) and long-term protection for intumescent paints.

Intumescent paints are the products with the best aesthetic finish for the protection of metal structures, however they are materials of higher costs and with longer application times (depending on thicknesses to be applied), and must be used with caution to ensure the economic viability of any enterprise. The material is usually applied with the help of a gun or brush and with variable thicknesses, between 500 µm and 1000 µm, depending on the mass of the materials to be protected and the critical temperature defined.

Although current formulations of intumescent paints can provide adequate fire resistance, they still have some weaknesses, such as: (i) the water solubility of some of their ingredients, makes them less efficient in environments with high moisture content; (ii) the cost of the raw material and (iii) the cost of its application limits use of the material, and (iv) the loss of intumescence properties and the consequent loss of thermal resistance with time in service (aging). The intumescent paints remain unchanged up to 200°C, at this temperature it starts a series of reactions, which generates passive protection against fires.

The proper thickness of intumescent paint is given by the analysis of the type of material that will be protected, its structure - which can be classified as light, medium and heavy - and by the use of construction - whether it is industrial, commercial or institutional. Thus, intumescent paint protects the environment according to your needs, where the fire resistance varies from 30 to 120 minutes at a maximum temperature of 1,000°C.

While useful, there still exists a need in the art for a material that improves upon the problems and limitations of existing materials.

An objective of the present invention is to provide a hybrid insulating compound that protects a substrate from extreme temperatures.

Another objective of the present invention is to provide a hybrid insulating compound that is more durable and eliminates the need for personal protective equipment.

These and other objectives will be apparent to those skilled in the art based upon the following written description, drawings, and claims.

CN 108358588 A describes a thermal insulation material and a preparation method.

US 2019/256418 A1 describes coated fibers for enhanced concrete structural reinforcement.

EP 3275307 A1 describes a plant growth substrate comprising mineral fibers and a binder.

WO 2018/181802 A1 describes a curable resin composition, dry film, cured product, electronic component and printed wiring board.

WO 2018/181803 A1 describes a curable resin composition, dry film, cured product and electronic component.

EP 3575374 A1 describes a low refractive index layer-containing pressure-sensitive adhesive/adhesive sheet.

### SUMMARY OF THE INVENTION

The present invention provides a hybrid insulating compound, wherein the hybrid insulating compound comprises:
2 to 60% by mass insulating nanoparticles;
5 to 40% by mass micro-silica spheres;
5 to 40% by mass inorganic fibers;
1 to 5% by mass sodium bentonite; and
5 to 50% by mass water, relative to the total weight of the hybrid insulating compound.

The present invention also provides a hybrid system, comprising the hybrid insulating compound of the invention.

The hybrid compound for insulating a substrate can be formed by dispersing functionalized inorganic materials in a non-toxic reagent at a controlled pH using volatile bases to form an aqueous dispersion. The aqueous dispersion can then be stirred either with a high-speed mechanical stirring device or an ultrasonic material stirring device to form a compound. The compound can then be applied to the substrate and then dried to form an insulating layer.

The dimensions of the functionalized inorganic nanomaterials preferably are between 10 nm to 12 mm and the controlled pH is preferably between 7 and 12. The layer of insulation has many characteristics with one being that it can protect the substrate from temperatures exceeding 1200 degrees Fahrenheit. The compound may also have an emissivity of between 0.90 and 0.95.

Typically, the inorganic fibers include at least one selected from the group consisting of: glass, carbon and mixed carbon and aramid.

Typically, the hybrid insulating compound further comprises inorganic semiconductors, wherein the inorganic semiconductors include at least one selected from the group consisting of: magnesium oxide, chromite, aluminum-cobalt, iron-chromium, and nickel-antimony-titanium.

Typically, the hybrid insulating compound is insulating when exposed to a temperature within a range of 1200 to 2100 degrees Celsius.

Typically, the hybrid insulating compound has an emissivity of at least 0.90, preferably from 0.90 to 0.95.

Typically, a diameter of the insulating nanoparticles is within a range of 10 nm to 12 mm.

Typically, the hybrid insulating compound is dispersed in at least one of the group consisting of: plaster, concrete, mortar, a metal, a polymer, a resin, and a paint.

### BRIEF DESCRIPTION OF THE DRAWINGS

Fig. 1 is a chart showing the heating and cooling of a hybrid compound over time and under direct heat; and
Fig. 2 is a chart showing the thermal efficiency of a hybrid insulating compound over time.

### DETAILED DESCRIPTION OF THE PREFERED EMBODIENTS

Referring to the Figures, a hybrid insulating compound 10 can be formed by dispersing functionalized inorganic nanomaterials in a non-toxic reagent at a controlled pH using volatile bases with the aid of high-speed mechanical stirring in conjunction with ultrasonic mechanical stirring. The aqueous dispersion includes different types of solid insulating particles, fibers solvents or other media for dispersion, additives, and water, where the dimensions of the constituents are between 10 nm to 12 mm. Preferably, the inorganic materials have high heat resistance, good mechanical resistance, and low electrical and thermal conductivity. The compound can be formed based upon a reaction between commercial and non-commercial materials of different sizes forming a dispersion of nanomaterials, in water with a controlled pH, preferably between 7.0 and 12, through the use of a mechanical, ultrasonic agitation tip and/or bath and mechanical agitation with propeller in high rotation.

Preferably, the dispersion technique used includes the mechanical stirring of the suspension, which can be carried out by a magnetic stirrer or with the aid of blades. Also, steps can be taken to promote the dispersion of nanomaterials in the aqueous medium which include pH control, viscosity and mechanical agitation at medium and high speed, and use of a surfactant or ultrasonic waves.

Due to the nanometric scale of the materials used in the compound, there is a physical-chemical interaction between the nanomaterials due to the high surface area and their chemical affinity. Due to its nanometric scale the liquid medium tends to agglomerate. This is because in general the forces of interaction between these nanomaterials are greater than the force of interaction with the solvent.

When applied on an appropriate substrate, the compound can form an insulating material having a solid structure, due to water evaporation. In one example the insulating material can become a solid film given evaporation of the volatile component and/or the chemical reaction for the purpose of photo and thermal protection. The insulating material can be formed by means of reaction between the constituents of the dispersion, and after curing the material can present low dimensional variation and can be used in a hybrid compound for insulating a substrate can be formed by dispersing functionalized inorganic nanomaterials in a non-toxic reagent at a controlled pH using volatile bases to form an aqueous dispersion. The aqueous dispersion can then be stirred to form the hybrid compound. The compound can then be applied to a substrate and dried to form an insulating layer. The insulating layer can protect the substrate from temperatures exceeding 1200 degrees Fahrenheit.

The curing or sintering can take place without the need of external energy, with low dimensional variation for fireproofing and/or thermal insulation applications, in systems that require maximum performance and complex protection geometries. The product after curing described herein has low thermal conductivity associated with high surface reflectivity and low density, and low VOC, as the solvent used is water. After curing, the insulating material can be crushed and used as an insulating filler in several types of systems and materials, such as polymers, metals, ceramics and/or products and processes in order to increase resistance to thermal and electrical flow.

The insulating material can be applied as a conventional paint using a spray system, airless, manual, projection equipment, or the like to form a uniform finishing layer of protective coating with excellent flame retardancy, thermal insulating, and anti-corrosion properties. The insulating material can be applied and used pure or through dispersion and incorporation into other systems, for use in several areas, such as incorporation into a polymeric, ceramic, metallic matric and laminated materials. The insulating material, in one example, is applied as conventional paint, which is used as a protective coating for thermal flow under extreme conditions of use. When applied in the form of a primer, whether pure or dispersed in a polymer, the insulating material has excellent adhesion to the substrate (ceramic, metallic and polymeric), hardness, abrasion resistance, corrosion resistance, and a good finish.

The agent containing the suspension of nanomaterials has applications in chemistry, engineering, biomedicine and electronics, as a raw material in processes of deposition of nanomaterials superficially by the methods of manual painting, spray painting and spray, by immersion of a substrate in the suspension, or by direct or indirect mixing in solid or liquid substrate.

Application of the compound can be used in several areas, such as electronics, energy efficiency, thermal insulation, fire breakers, sensors, super-efficient filters, civil, aerospace, aeronautical, nautical, sports, etc. In most cases, the use of these nanomaterials can be carried out by promoting their dispersion in an aqueous reagent, forming a suspension of the nanomaterials.

The hybrid compound works efficiently in the transference phenomena by conduction, convection and radiation. Combining these three phenomena in the same product, a high efficiency in thermal insulation occurs, above the commercial materials currently available on the market.

Heat transfer occurs due to the temperature difference between two bodies and can occur in three different ways: conduction, convection and radiation. The first mode will occur theoretically in a stationary medium, in solids or fluids, the second will occur between a surface and a fluid in motion and finally the third mode will be through electromagnetic waves emitted by surfaces at a non-zero temperature.

One way to evaluate the efficiency of an insulator is to measure its thermal conductivity (K), which refers to the amount of heat that is transferred in a solid at a certain temperature. The efficiency also depends on the type of bond, packaging and atomic arrangements. Thermal conductivity is of great importance in this work because it characterizes the ability of a material to transfer heat.

The transfer of heat by conduction occurs by two distinct mechanisms due to the existence of free electrons, which is why metals are excellent conductors and due to the vibration of the crystalline network, phonemes. The Nano Shield family was designed so that the connections between the species that form the coating are covalent, there are no free electrons, so it will be structurally an insulator. In addition, the symmetry of the solid formed was broken, which further complicates the conducting, material and amorphous phenomenon.

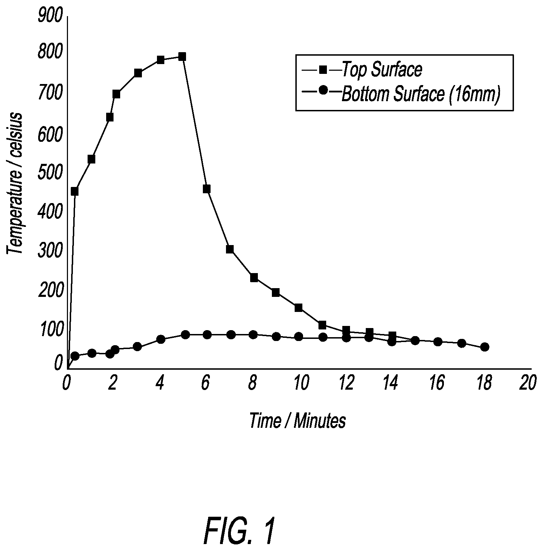

In the case of heat transfer by radiation, the material was designed to have high reflectance and emissivity, so when the radiated heat interacts with the product surface, it has a re-emitted part, which reduces the surface temperature of the coating. These characteristics associated with its low density provide a very high cooling rate. In some cases, in 12 minutes the coating has a temperature close to room, figure 1.

The reflectivity, emissivity and absorptivity values of a material are factors that determine the efficiency of its thermal insulation power. Electromagnetic radiation from a heated body may have part of its intensity absorbed (la), transmitted (It) or reflected (Ir) when interaction with a solid occurs. These components can be transformed into absorbency (A), transmissivity (T) and reflectivity (R), these will always be present in the process of interaction of radiation with matter and that is why they were worked on in the development of the thermal insulation.

More reflective materials will have greater 'cooling' power, and their surfaces will have a lower temperature when compared to non-reflective materials. The hybrid compound provides high values of reflectivity and emissivity and small values of absorptivity, these factors improve its efficiency in relation to thermal insulation.

Temperature reduction effects due to reflectivity are due to surface characteristics (roughness and porosity). On very rough surfaces, incident waves can be reflected more than once, increasing the probability of energy absorption.

The relationship between porosity, pore size and distribution is very important. Surfaces with pores of larger diameters reflect better radiation at longer wavelengths, while smaller pores improve reflectivity at shorter wavelengths. This decrease in temperature due to the increase in porosity can be explained by Mie's theory (pores of larger sizes, do not spread radiation of shorter lengths efficiently).

Due to the existence of nanoparticles in its formulation, the hybrid compound, when cured, presents porosity in a size range ranging from nano to mesopore, this pore size distribution allows the product to be able to reflect ultraviolet to infrared length radiation. This wide range of reflectivity helps to lower the temperature of the insulator under extreme heat conditions, contributing to a more efficient spread of radiation.

It is also possible to achieve a reduction in the surface temperature of the insulator using a specific compound, for example; titanium dioxide, which is a semi-conductor, which reflects more light, improving the reflectivity of the surface.

The reduction in surface temperature may be increased due to the use of compounds such as titanium oxide, magnesium oxide, aluminum-cobalt (CoAl), iron-chromium (FeCr), nickel-antimony-titanium (Ni-Sb-Ti) and carbides, which can enter the composition of the compound through a specific use. The use of these additives improves the reflection of radiation by reducing the temperature.

The absorbed radiation intensity (la) can be used part to increase the temperature of the material and part can be irradiated to the environment, this part irradiated again consists of the emissivity of the material. In materials that have surfaces (solids and liquids), the emissivity value as well as the other radiative properties depend on the surface roughness, the temperature, the wavelength and the angle of the incident radiation.

Materials with high emissivity (ability to emit heat) promote radiative cooling. Metallic materials have low emissivity and the application of coating with higher emissivity values increases the emissivity of the surface.

In one example, the hybrid compound has a high emissivity, between 0.90 to 0.95, which favors, together with its low density, the radioactive cooling of material, and tests show that the insulator, conditioned at 1200°C, cools to 60°C in approximately 12 minutes, figure 1.

Due to factors presented as high reflectivity and emissivity values, low absorptivity and density, nano and meso porosity. Under a direct propane flame, 1,200°C, the Nano Shield surface is at 790°C, figure 1. The hybrid compound, after curing has low thermal conductivity associated with high surface reflectivity and reduced density. Low VOC, as the solvent used is water.

All coatings of the hybrid compound family have low density, the density of the dry product is between 0.35 and 0.50 g.cm-3. The low weight of the material after curing helps in the efficiency of thermal insulation and in the reduction weight on the structure that the material was applied to.

Based on the energy efficiency proposals, the hybrid compound satisfies the prerequisites: they are composed of nano charge and cold sintering. They have low dimensional variation after curing and have been developed for fire break and thermal insulation applications in systems that require maximum performance without the geometric limitations of commercial insulators.

The hybrid compound can be used in projects and/or equipment that operate between the temperature range of 200 to 2100°C continuously. However, the great highlight of the hybrid compound and its use is at temperatures above 1,200°C, where currently there are no commercial products that satisfy the conditions of performance, application and durability.

The hybrid compound can resist direct and radiated flame at temperatures above 1400°C and can be heated and cooled immediately using water without cracking. In tests performed, the K factor of the coatings applied directly under a substrate was measured, the data was collected and the test conditions found: coating thickness 16mm, temperature of the hot face 1200°C, ambient temperature 22.6°C, and direct flame propane under the coating surface. The data found indicated that the best performing coating had a K of 0.017W / mK and the worst performing of 0.035W / mK at a temperature of 1200°C.

Under a direct flame of 1200°C, a 16mm thick sample showed a surface temperature of 793°C and a cold face temperature of 79°C. After removing the sample from the heat and 12 minutes later, the surface temperature of the coating was 57°C.

The dispersions of silica and amorphous silica give the system strength and hardness of the formed material network and resistance to high temperatures and thermal shock. Inorganic fibers give the product resistance to traction and flexion.

The increase in reflectance and emissivity are achieved by nature itself in the insulating nano charge, the silica charges, inorganic semiconductors and the carbides. The semiconductors used, three may be of commercial origin: titanium oxide, magnesium oxide and chromite, the others (aluminum-cobalt (CoAl), iron-chromium (FeCr), nickel-antimony-titanium (Ni-Sb-Ti)).

The inorganic fibers used may be those of glass, aramid, carbon and mixed carbon and aramid, may be from commercial sources. In some applications they are functionalized and doped with graphene and nanotubes.

Electro fused silica and bentonite are used as thickeners and binders for the hybrid compound dispersion for the production of the insulating product after water evaporation. Modifiers of rheological properties such as inert pigments and additives of commercial origin. Polymeric resins are used as an agent of plasticity, tackiness and binder, all commercial water-based or not, such as acrylic, alchemical, epoxy, polyurethane resins, Phenol-formaldehyde, polyurethane, furfural resin, poly acrylonitrile, polyimide, sucrose and tannin.

The formulations to produce the insulating nano-charge are described in general, with the composition of an insulating nanoparticle in the content of 2 to 60% by mass, micro-silica spheres in the content of 5 to 40% by mass, inorganic fibers in the content of 5 to 40% by mass, sodium bentonite in the content of 1 to 5% by mass, and water in the content of 5 to 50% by mass. The dispersion is left to stand for the formation reactions of the new insulator and then heat treated to adjust its thermal and mechanical properties.

The prepared material can be used directly on the substrate or incorporated into a media vehicle, as in the example below the vehicle is a polymer. Example 1: formulation of a hybrid polymer nano-charge system. The insulating particle, solidified and treated, must be crushed to the appropriate granulometry for its use. After crushing the Nano Shield will be incorporated into the polymer in the content of 2 to 80% by mass, in this formulation the inert pigments will enter the composition of the insulator, the content of 1 to 10% by mass, inorganic semiconductors in the content of 2 to 30% by mass and carbides in the content of 5 to 35%.

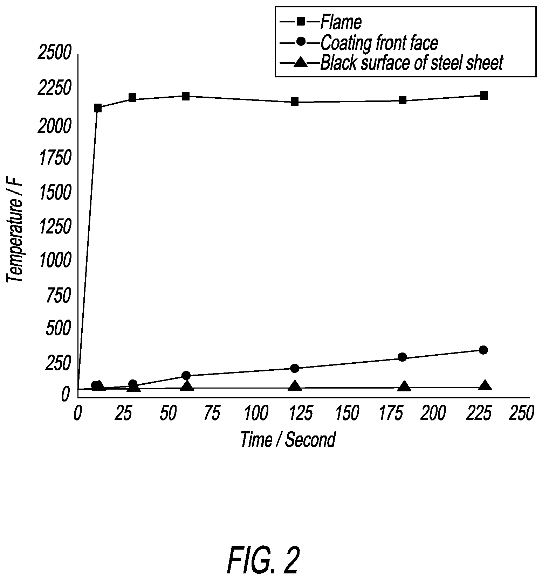

In the formulation presented above the thermal properties determined were: the fire exposure lasted about 3 minutes 45 seconds before it was terminated. As shown in the summary table and chart below, the temperature on the front surface of the coating layer gradually increased from 73.5°F (23°C) to about 342°F (172°C) stayed at about 72 to 73°F, while the flame temperature as recorded through the TC in front of coating surface jumped to over 2000°F (1100°C) in about 11 seconds and maintained at that level for the rest test time. The temperature on the back face of the steel sheet remained at between 72 to 73°F (22°C to 23°C). It was estimated that the coating thickness at the center of the fire exposure was in the range of 2 to 5 mm, Figure 2.

Example 2: Formulation of a hybrid polymer-nano charge system. The insulating particle, solidified and treated, must be crushed to the appropriate granulometry for its use. After crushing, the inert pigments will be incorporated into the polymer in the content of 10 to 60% by mass, in this formulation the inert pigments will enter the content, from 1 to 10% by mass, additives in the content of 3 to 20% by mass, inorganic semiconductors, in the content of 2 to 20% by mass, silica electro-fused in the content of 5 to 50% and inorganic fibers in the range of 5 to 30% by mass.

Example 3: Formulation of a hybrid polymer nano-charge system. The insulating particle, solidified and treated, must be crushed to the appropriate granulometry for its use. After being crushed, it will be incorporated into a mixture containing inert pigments, the content of 1 to 10% by weight, inorganic semiconductors in the content of 2 to 15% by weight, electro-cast fused silica in the content of 5 to 35%, inorganic fibers in the range of 5 to 30% by mass and water in range of 30 to 50% by mass.

Example 4: Formulation of a hybrid system. The insulating particle, solidified and heat treated, must be crushed to the appropriate granulometry for its use. After crushing, the Nano Shield will be incorporated into a mixture containing inert pigments, the content of 1 to 10% by mass, inorganic semiconductors in the content of 2 to 15% by mass, silica fused in the content of 5 to 35%, inorganic fibers in the range of 5 to 30% by mass, bentonite in the content of 2 to 4% by mass and water in range of 30 to 50% by mass.

Example 5: Formulation of a hybrid system. The insulating particle, solidified and thermally treated, must be crushed in the appropriate granulometry for its use and incorporated into a mixture containing inert pigments, content from 1 to 8% by mass, inorganic semiconductors in the content from 2 to 20% by mass, fused silica in the content of 5 to 30%, inorganic fibers in the range of 5 to 27% by mass, amorphous silica in the mass content of 5 to 20% by mass, bentonite in the content of 1 to 5% by mass and water in the range of 30 to 30% 50% by mass.

Example 6: Formulation of a polymer nano-charge hybrid system. The insulating particle, solidified and treated, must be crushed to the appropriate granulometry for its use. After crushed it will be incorporated to the polymer in the content of 10 to 60% by mass, in this formulation the inert pigments will enter the composition of the insulator, the content of 1 to 10% by mass, additives in the content of 3 to 20% by mass, semiconductors inorganic content of 2 to 20% by weight.

The use of this new hybrid insulator applied directly on the surface to be isolated or dispersed in polymeric matrices, composites, in inorganic materials such as plaster, concrete, mortar, etc. and metal alloys is described herein. To be used in insulation, anti-flame and firefighting systems.

The use of this insulator in a formulation involving polymeric materials, be it 100% solid or diluted and/or in aqueous dispersions for use in fire and insulation systems is described herein. Which may or may not be applied as a conventional paint using a spray system, airless, manual, projection equipment, or the like to form a uniform finishing layer of protective coating with excellent flame retardance, thermal insulation, and anti-corrosion properties.

The use of commercial insulating fillers in formulations like those presented in the description of the materials is herein described. Especially when incorporated into polymeric matrices such as all commercial water-based or not, such as acrylic, alchemical, epoxy, polyurethane resins, Phenol-formaldehyde, polyurethane, furfural resin, poly acrylonitrile, polyimide, sucrose and tannin.

From the above discussion and accompanying figures and claims it will be appreciated that the compound 10 offers many advantages over the prior art.

## Claims

1. A hybrid insulating compound, wherein the hybrid insulating compound comprises:
2 to 60% by mass insulating nanoparticles;
5 to 40% by mass micro-silica spheres;
5 to 40% by mass inorganic fibers;
1 to 5% by mass sodium bentonite; and
5 to 50% by mass water, relative to the total weight of the hybrid insulating compound.

2. The hybrid insulating compound of claim 1, wherein theinorganic fibers include at least one selected from the group consisting of: glass, carbon and mixed carbon and aramid.

3. The hybrid insulating compound of claim 1, wherein the hybrid insulating compound further comprises inorganic semiconductors, wherein the inorganic semiconductors include at least one selected from the group consisting of: magnesium oxide, chromite, aluminum-cobalt, iron-chromium, and nickel-antimony-titanium.

4. A hybrid system, comprising the hybrid insulating compound of any one of claims 1 to 3.

5. The hybrid system of claim 4, comprising:
2 to 80 % by mass of the hybrid insulating compound;
a polymer;
1 to 10 % by mass inert pigments;
2 to 30 % by mass inorganic semiconductors; and
5 to 35 % by mass carbides, relative to the total weight of hybrid system.

6. The hybrid system of claim 4, comprising:
10 to 60 % by mass of the hybrid insulating compound;
a polymer;
1 to 10 % by mass inert pigments;
3 to 20 % by mass additives;
2 to 20 % by mass inorganic semiconductors;
5 to 50% by mass electro-fused silica; and
5 to 30% by mass inorganicfibres, relative to the total weight of the hybrid system.

7. The hybrid system of claim 4, comprising:
the hybrid insulating compound;
a polymer;
1 to 10 % by mass inert pigments;
2 to 15 % by mass inorganic semiconductors;
5 to 35 % by mass electro-cast fused silica;
5 to 30 % by mass inorganicfibres; and 30 to 50 % by mass water, relative to the total weight of the hybrid system.

8. The hybrid system of claim 4, comprising:
the hybrid insulating compound;
1 to 10 % by mass inert pigment;
2 to 15 % by mass inorganic semiconductors;
5 to 35 % by mass fused silica;
5 to 30 % by mass inorganicfibres;
2 to 4 % by mass bentonite and
30 to 50 % by mass water, relative to the total weight of the hybrid system.

9. The hybrid system of claim 4, comprising:
the hybrid insulating compound;
1 to 8 % by mass inert pigments;
2 to 20 % by mass inorganic semiconductors;
5 to 30 % by mass fused silica;
5 to 27 % by mass inorganic fibres;
5 to 20 % by mass amorphous silica;
1 to 5 % by mass bentonite; and
30 to 50 % by mass water, relative to the total weight of the hybrid system.

10. The hybrid system of claim 4, comprising:
10 to 60 % by mass of the hybrid insulating compound;
a polymer;
1 to 10 % by mass inert pigments;
3 to 20 % by mass additives; and
2 to 20 % by mass inorganic semiconductors, relative to the total weight of the hybrid system.

11. The hybrid insulating compound of claim 1, wherein the hybrid insulating compound is insulating when exposed to a temperature within a range of 1200 to 2100 degrees Celsius.

12. The hybrid insulating compound of claim 1, wherein the hybrid insulating compound has an emissivity of at least 0.90, preferably from 0.90 to 0.95.

13. The hybrid insulating compound of claim 1, wherein a diameter of the insulating nanoparticles is within a range of 10 nm to 12 mm.

14. The hybrid insulating compound of claim 1, wherein the hybrid insulating compound is dispersed in at least one of the group consisting of: plaster, concrete, mortar, a metal, a polymer, a resin, and a paint.

## Patentansprüche

1. Hybride isolierende Verbindung, wobei die hybride isolierende Verbindung umfasst:
2 bis 60 Masse-% isolierende Nanopartikel;
5 bis 40 Masse-% Mikrosiliziumdioxidkugeln;
5 bis 40 Masse-% anorganische Fasern;
1 bis 5 Masse-% Natriumbentonit; und
5 bis 50 Masse-% Wasser, bezogen auf das Gesamtgewicht der hybriden isolierenden Verbindung.

2. Hybride isolierende Verbindung nach Anspruch 1, wobei die anorganischen Fasern wenigstens eines beinhalten, das aus der Gruppe ausgewählt ist, bestehend aus: Glas, Kohlenstoff und gemischter Kohlenstoff und Aramid.

3. Hybride isolierende Verbindung nach Anspruch 1, wobei die hybride isolierende Verbindung ferner anorganische Halbleiter umfasst, wobei die anorganischen Halbleiter wenigstens einen beinhalten, der aus der Gruppe ausgewählt ist, bestehend aus: Magnesiumoxid, Chromit, Aluminium-Kobalt, Eisen-Chrom und Nickel-Antimon-Titan.

4. Hybridsystem, umfassend die hybride isolierende Verbindung nach einem der Ansprüche 1 bis 3.

5. Hybridsystem nach Anspruch 4, umfassend:
2 bis 80 Masse-% der hybriden isolierenden Verbindung;
ein Polymer;
1 bis 10 Masse-% inerte Pigmente;
2 bis 30 Masse-% anorganische Halbleiter; und
5 bis 35 Masse-% Karbide, bezogen auf das Gesamtgewicht des Hybridsystems.

6. Hybridsystem nach Anspruch 4, umfassend:
10 bis 60 Masse-% der hybriden isolierenden Verbindung;
ein Polymer;
1 bis 10 Masse-% inerte Pigmente;
3 bis 20 Masse-% Zusatzstoffe;
2 bis 20 Masse-% anorganische Halbleiter;
5 bis 50 Masse-% elektroverschmolzenes Siliciumdioxid; und
5 bis 30 Masse-% anorganische Fasern bezogen auf das Gesamtgewicht des Hybridsystems.

7. Hybridsystem nach Anspruch 4, umfassend:
die hybride isolierende Verbindung;
ein Polymer;
1 bis 10 Masse-% inerte Pigmente;
2 bis 15 Masse-% anorganische Halbleiter;
5 bis 35 Masse-% elektrogegossenes Siliciumdioxid;
5 bis 30 Masse-% anorganische Fasern; und
30 bis 50 Masse-% Wasser bezogen auf das Gesamtgewicht des Hybridsystems.

8. Hybridsystem nach Anspruch 4, umfassend:
die hybride isolierende Verbindung;
1 bis 10 Masse-% inerte Pigmente;
2 bis 15 Masse-% anorganische Halbleiter;
5 bis 35 Masse-% verschmolzenes Siliciumdioxid;
5 bis 30 Masse-% anorganische Fasern;
2 bis 4 Masse-% Bentonit und
30 bis 50 Masse-% Wasser bezogen auf das Gesamtgewicht des Hybridsystems.

9. Hybridsystem nach Anspruch 4, umfassend:
die hybride isolierende Verbindung;
1 bis 8 Masse-% inerte Pigmente;
2 bis 20 Masse-% anorganische Halbleiter;
5 bis 30 Masse-% verschmolzenes Siliciumdioxid;
5 bis 27 Masse-% anorganische Fasern;
5 bis 20 Masse-% amorphes Siliciumdioxid;
1 bis 5 Masse-% Bentonit; und
30 bis 50 Masse-% Wasser bezogen auf das Gesamtgewicht des Hybridsystems.

10. Hybridsystem nach Anspruch 4, umfassend:
10 bis 60 Masse-% der hybriden isolierenden Verbindung;
ein Polymer;
1 bis 10 Masse-% inerte Pigmente;
3 bis 20 Masse-% Zusatzstoffe; und
2 bis 20 Masse-% anorganische Halbleiter bezogen auf das Gesamtgewicht des Hybridsystems.

11. Hybride isolierende Verbindung nach Anspruch 1, wobei die hybride isolierende Verbindung isolierend ist, wenn sie einer Temperatur in einem Bereich von 1200 bis 2100 Grad Celsius ausgesetzt ist.

12. Hybride isolierende Verbindung nach Anspruch 1, wobei die hybride isolierende Verbindung einen Emissionsgrad von wenigstens 0,90, vorzugsweise von 0,90 bis 0,95, aufweist.

13. Hybride isolierende Verbindung nach Anspruch 1, wobei ein Durchmesser der isolierenden Nanopartikel in einem Bereich von 10 nm bis 12 mm liegt.

14. Hybride isolierende Verbindung nach Anspruch 1, wobei die hybride isolierende Verbindung in wenigstens einem der Gruppe dispergiert ist, bestehend aus: Putz, Beton, Mörtel, einem Metall, einem Polymer, einem Harz und einer Farbe.

## Revendications

1. Composé isolant hybride, le composé isolant hybride comprenant :
2 à 60 % en masse de nanoparticules isolantes,
5 à 40 % en masse de sphères de micro-silice,
5 à 40 % en masse de fibres inorganiques,
1 à 5 % en masse de bentonite sodique, et
5 à 50 % en masse d'eau, par rapport au poids total du composé isolant hybride.

2. Composé isolant hybride selon la revendication 1, dans lequel les fibres inorganiques comprennent au moins un type de fibre choisi parmi : verre, carbone et un mélange de carbone et d'aramide.

3. Composé isolant hybride selon la revendication 1, le composé isolant hybride comprenant en outre des semi-conducteurs inorganiques, lesdits semi-conducteurs inorganiques comprenant au moins un type choisi parmi : oxyde de magnésium, chromite, aluminium-cobalt, fer-chrome et nickel-antimoine-titane.

4. Système hybride, comprenant le composé isolant hybride selon l'une quelconque des revendications 1 à 3.

5. Système hybride selon la revendication 4, comprenant :
2 à 80 % en masse de composé isolant hybride,
un polymère,
1 à 10 % en masse de pigments inertes,
2 à 30 % en masse de semi-conducteurs inorganiques, et
5 à 35 % en masse de carbures, par rapport au poids total du système hybride.

6. Système hybride selon la revendication 4, comprenant :
10 à 60 % en masse de composé isolant hybride,
un polymère,
1 à 10 % en masse de pigments inertes,
3 à 20 % en masse d'additifs,
2 à 20 % en masse de semi-conducteurs inorganiques,
5 à 50 % en masse de silice électro-fondue, et
5 à 30 % en masse de fibres inorganiques, par rapport au poids total du système hybride.

7. Système hybride selon la revendication 4, comprenant :
le composé isolant hybride,
un polymère,
1 à 10 % en masse de pigments inertes,
2 à 15 % en masse de semi-conducteurs inorganiques,
5 à 35 % en masse de silice électro-fondue,
5 à 30 % en masse de fibres inorganiques, et
30 à 50 % en masse d'eau, par rapport au poids total du système hybride.

8. Système hybride selon la revendication 4, comprenant :
le composé isolant hybride,
1 à 10 % en masse de pigment inerte,
2 à 15 % en masse de semi-conducteurs inorganiques,
5 à 35 % en masse de silice électro-fondue,
5 à 30 % en masse de fibres inorganiques,
2 à 4 % en masse de bentonite, et
30 à 50 % en masse d'eau, par rapport au poids total du système hybride.

9. Système hybride selon la revendication 4, comprenant :
le composé isolant hybride,
1 à 8 % en masse de pigments inertes,
2 à 20 % en masse de semi-conducteurs inorganiques,
5 à 30 % en masse de silice électro-fondue,
5 à 27 % en masse de fibres inorganiques,
5 à 20 % en masse de silice amorphe,
1 à 5 % en masse de bentonite, et
30 à 50 % en masse d'eau, par rapport au poids total du système hybride.

10. Système hybride selon la revendication 4, comprenant :
10 à 60 % en masse de composé isolant hybride,
un polymère,
1 à 10 % en masse de pigments inertes,
3 à 20 % en masse d'additifs, et
2 à 20 % en masse de semi-conducteurs inorganiques, par rapport au poids total du système hybride.

11. Composé isolant hybride selon la revendication 1, le composé isolant hybride étant isolant lorsqu'il est exposé à une température se situant dans la plage allant de 1200 à 2100 degrés Celsius.

12. Composé isolant hybride selon la revendication 1, le composé isolant hybride présentant une émissivité d'au moins 0,90, de préférence de 0,90 à 0,95.

13. Composé isolant hybride selon la revendication 1, dans lequel le diamètre des nanoparticules isolantes se situe dans la plage allant de 10 nm à 12 mm.

14. Composé isolant hybride selon la revendication 1, le composé isolant hybride étant dispersé dans au moins un élément parmi le plâtre, le béton, le mortier, un métal, un polymère, une résine et une peinture.
